# EUROPEAN PATENT SPECIFICATION

(11) **EP 0 618 839 B1**
(45) Date of publication and mention of the grant of the patent: **17.01.2001**
(21) Application number: 93901103.7
(22) Date of filing: 21.12.1992
(51) Int. Cl.: B01D 63/02, B01D 53/22

(54) **FLEXIBLE HOLLOW FIBER FLUID SEPARATION MODULE**
FLEXIBLES HOHLFASER-FLUIDTRENNMODUL
MODULE DE SEPARATION DE FLUIDE SOUPLE A FIBRES CREUSES

(30) Priority: 20.12.1991 US 812250; 02.07.1992 US 908905
(43) Date of publication of application: 12.10.1994
(73) Proprietor: MG GENERON, INC., Malvern, Pennsylvania 19355 (US)
(72) Inventor: TRIMMER, Johnny, L., Antioch, CA 94509 (US); MAHLEY, George, E., III, Berkeley, CA 94703 (US); DUNNING, Stephen, A., Lafayette, CA 94549 (US); CLARK, Daniel, O., Benicia, CA 94510 (US)
(74) Representative: Casalonga, Axel
(86) International application number: US9211041
(87) International publication number: WO9312866

(56) References cited:
- EP-A- 0 207 379
- EP-A- 0 222 032
- EP-A- 0 321 637
- EP-A- 0 371 189
- WO-A-90/11812
- FR-A- 2 348 707
- US-A- 3 963 622
- US-A- 4 246 120
- US-A- 4 846 977

## Description

The present invention relates to a flexible hollow fiber fluid (e.g. gas) separation module. The flexible module is shaped (deformed, coiled or bent) into any number of desirable configurations to satisfy any number of overall system, geometry or space restrictions, specifications or limitations.

Hollow fiber membrane modules are commonly divided into two or three regions, wherein such regions are sealed so that fluid cannot communicate from one region to the other, except by passing the fluid through the bores of the hollow fibers or permeating the fluid across the walls of the hollow fibers. When feed fluid is introduced into the open bores, this approach is usually termed "boreside feed" or "bore feed." Alternatively, the feed fluid may contact the exterior of the hollow fibers with one or more components permeating and exiting through the hollow bores (lumen). This approach is usually termed "shellside feed" or "shell feed." Generally, a hollow fiber membrane module comprises a bundle of hollow fibers arranged in a fashion such that each end of the hollow fibers are embedded in a resin matrix commonly referred to as a tubesheet or header. Such fibers communicate through the tubesheets and are open on the opposite face of each tubesheet. The opposite face of the tubesheet means herein that face of the tubesheet which is opposite the bundle. Normally, the regions of the membrane separation module are defined and divided from one another by the tubesheets and seals about the tubesheets. In a shellside feed membrane module, the fluids to be separated are introduced into the module in the region between the tubesheets and the outside of the fibers, and the fluids which permeate through the hollow fiber membranes into the bores of the hollow fibers are removed at one or both ends of the hollow fibers in the regions adjacent to the opposite face of one or both. In shellside feed processes, the region about the hollow fiber bundles is pressurized. The non-permeating fluids are removed from a region in the area between the tubesheets but outside of the fibers. Optionally, a sweep fluid is used in the permeate side. Most commercial industrial fluid separation processes operate in this fashion.

In a boreside feed process, the mixture of fluids to be separated is introduced into one end of the membrane module adjacent to the opposite face of one of the tubesheets (i.e. the first tubesheet), such that the feed mixture flows down the bores of the hollow fibers and one or more components permeate through the walls of the hollow fibers into the region outside the fibers between the first and second tubesheets. In the region between tubesheets, the fluid which selectively permeates through the fiber membrane wall is removed from the shellside of the membrane. Those fluids which do not permeate through the membrane exit into a region adjacent to the opposite fare of the second tubesheet and are removed from that region. As the tubesheets are usually comprised of a polymeric resinous material, significant bending, compressive, and shear stresses are exerted on such tubesheets by such boreside operation. The stresses described above create a first problem with supporting the tubesheets and preventing them from collapsing in on the hollow fiber bundle.

A second problem in boreside feed is obtaining proper flow and distribution of the permeate fluid on the shell side of the fibers. One of the driving forces in a membrane separation process is a chemical potential gradient (e.g. concentration gradient or partial pressure gradient) across the membrane. As the mixture of fluids to be separated flows down the bores and the more selectively permeable fluids permeate through the hollow fibers, the concentration or partial pressure of the selectively permeable fluids along the hollow fibers is reduced and the concentration on the shellside of the selectively permeable fluids increases. This results in a lowering of the driving force.

A third problem is that if the flow of the permeate fluid on the shellside of the membranes is not properly controlled, there will be localized areas of high concentration or partial pressure of the permeate fluid and flow to the exit ports may not occur in an efficient or effective manner.

A fourth problem is the shape, geometry or volume requirements needed for conventional fluid separation modules. Conventional modules are usually in an essentially linear configuration, and thus to obtain high volumes of separation of permeate, the linear modules are often bulky, inflexible, inconvenient to position, occupy considerable space, etc. Previous attempts to change the linear shape of the module have resulted in crimping of the fibers, reduced flow, less than effective or efficient separation and the like.

A number of references which show the general state of the art include, but are not limited to, the following U.S. patents: US-A 3,339,341; US-A 3,832,830; US-A 4,367,139; US-A 4,451,369; US-A 4,508,548; US-A 4,734,106, US-A 4,707,267; US-A 4,781,832; US-A 4,781,834; US-A 4,871,379; US-A 4,959,152; US-A 4,961,760; US-A 4,929,259; US-A 5,013,331; and US-A 5,013,437.

Document EP-A-0 222 032 discloses a blood oxygenator comprising a rigid elongated housing in which is disposed an elongated fiber assembly including a coiled bundle of hollow fibers of a microporous membrane.

Document FR-A-2 348 707 discloses an apparatus for blood dialysis comprising a rigid housing in which is disposed a curved bundle of hollow fibers.

Document US-A-4 846 977 discloses hollow fiber separator devices including flexible helix or "U"-shaped fiber bundles disposed in a rigid housing.

Documents EP-A-0 207 379 and EP-A-0 371 189 disclose U-shaped bundles of hollow fibers disposed in rigid housings.

EP-A-0 321 637 discloses a shell-less, bore side feed air permeator, wherein the fiber bundle is covered along a portion of its length by a sleeve to promote counter-current flow of permeate.

None of these documents discloses or suggests a curved flexible separation module comprising a flexible, impervious protective tubing surrounding the fiber bundle to form a flexible, optionally pressure resisting, casing.

Therefore, a need exists for a fluid separation module which can be shaped (deformed) to assume a shape and size to meet space/volume requirements of the particular fluid separation application. The present invention also has weight and cost advantages as well as ease of fabrication. The present invention provides such a curved shaped compact separation module.

The present invention consists of a curved shaped fluid separation module having boreside feed, comprising:
A. a plurality of hollow fiber membranes, wherein the hollow fiber membranes are arranged in a bundle form having a first end and a second end and are adapted for the separation of one or more fluids from one or more other fluids, said hollow fibers having bores open at said first and second ends of said bundle;
B. a first tubesheet comprising a thermoset or thermoplastic polymeric material in which said first end of the fiber bundle is embedded so that the fiber membranes communicate through the first tubesheet and are open on an opposite face of the first tubesheet, and the disposition of the second end of the fiber bundle is selected from the group consisting of:
   (a) the second end of the hollow fiber bundle is embedded in the first tubesheet so that the fiber membranes communicate through the first tubesheet and are open on the opposite face of the first tubesheet; and
   (b) the second end of the hollow fiber bundle is embedded in a second separate tubesheet comprising a thermoset or thermoplastic polymeric material so that the fiber membranes communicate through the second tubesheet and are open on an opposite face of the second tubesheet;
C. end capping means. adapted for introducing a feed mixture of fluids into the bores of the hollow fibers and for removing the fluids which do not permeate through the hollow fiber membranes, said end capping means forming a sealed feed inlet region provided with a feed inlet means for introducing said feed mixture of fluids and a sealed non-permeate outlet region provided with a non-permeate outlet means for removing the fluids which do not permeate through the hollow fiber membranes, wherein in the case of alternative (a) said end capping means is a single means attached to the first tubesheet and including a barrier partly defining within said single end capping means said sealed feed inlet region and said sealed non-permeate outlet region, and in the case of alternative (b) an end capping means is attached to each of said first and second tubesheets, the end capping means attached to said first tubesheet forming said sealed feed inlet region and being provided with a feed inlet means and the end capping means attached to said second tubesheet forming said sealed non-permeate outlet region and being provided with a non-permeate outlet means; and
D. a curved, flexible, impervious protective tubing open at both ends and including at least one permeate exit means enclosing the hollow fiber membranes bundle attached to first tubesheet and optional second tubesheet when present, wherein in the case of alternative (a) both open ends of said protective tubing are sealed to said single end capping means and in the case of alternative (b) one end of the tubing is sealed to one end capping means and the other end of the tubing is sealed to the other end capping means, said protective tubing forming a flexible, optionally pressure resisting, casing.

When the exit means of the flexible tubing is located near the first tubesheet in alternative (b) countercurrent flow of the permeate is obtained.

In a preferred embodiment, these hollow fiber membrane separation modules provide for a support of the resin tubesheet, while at the same time having a shape which optimizes the overall volume/space requirements of the separation to be performed. In some preferred embodiments, the modules of the invention demonstrate improved permeate flow and demonstrate a more efficient recovery of permeate and non-permeate fluids.

Figure 1 is a cutaway schematic representation of a module without a container for boreside feed.

Figure 2 demonstrates a schematic drawing of a preferred embodiment of the invention wherein the tubesheet support means also functions as the membrane flexible protective tubing using bolts and gaskets.

Figure 3 is a side view of the module deformed in the shape of a french horn.

Figure 4 is a front view of the module deformed in the shape of a french horn.

Figure 5 is a cutaway schematic representation of one end of the linear premodule (i.e. prior to forming permeate and feed regions) having a tubesheet not bonded to the protective tubing.

Figure 6 is a top view of a dual french horn separation module.

Figure 7 is a side view of the dual french horn module.

Figure 8 is a front view of the dual french horn module.

As used herein:
"container" refers to an optional mechanical protection encasing the module.
"Flexible non-permeable protective tubing" refers to a hose, a thin wall metal tubing, convoluted metal tubing, flexible plastic tubing and flexible plastic tube. This flexible non-permeable protective tubing need not be pressure resistant.
"Port" refers to any inlet or outlet opening in the module, e.g. nozzle, tube, fitting, hole or opening or the like wherein the fluid enters or exits the module or the container.
"Shaped or deformed" refers to any shape that the module assumes usually other than linear after assembly in a substantially linear form. Thus, the final shape of the module may include, but is not limited to, a circle, a coil (of at least one ring), a french horn, a spiral, a helix, a double helix, a square, an oval, a U-shape, or combinations thereof. A critical parameter of the deformation is that a significant number of hollow fibers in the bundle are not significantly broken, stretched or crimped, or put under any excessive stress, pressure or compression such that the separation function of the hollow fiber bundle is impaired, diminished or otherwise deleteriously affected.

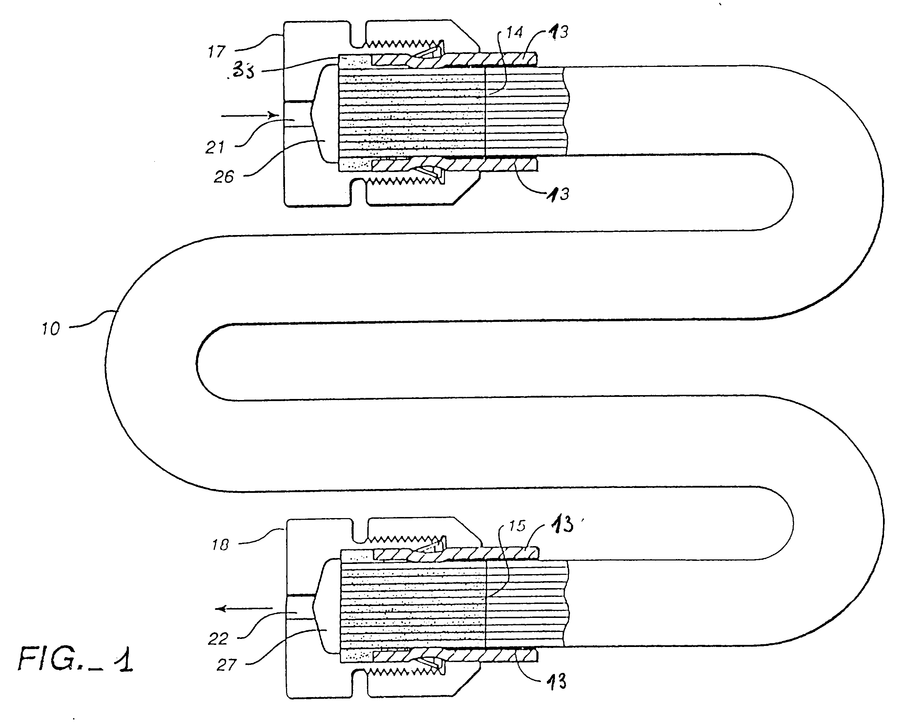

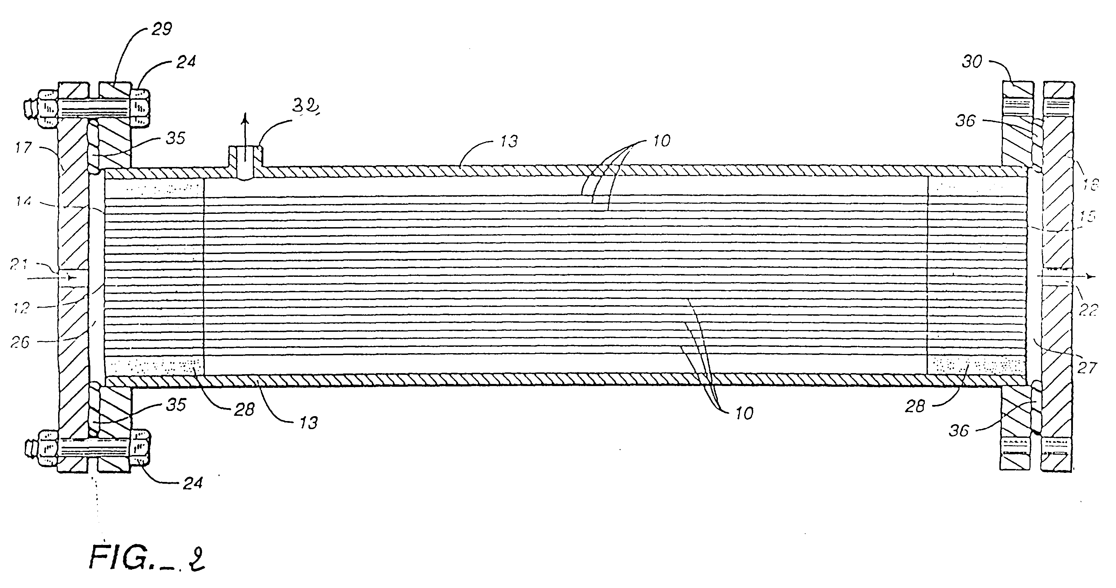

The following text relates to Figure 1-8 and is discussed in greater detail in the later sections.

The present invention relates to flexible curved shaped modules for separation of one or more fluids from one or more other fluids in which the separation is performed by transporting selectively one or more fluids across a membrane. In this invention, the membranes are in a hollow fiber form and the device is adapted boreside feed for feeding the mixture to be separated down the bore or lumen of the hollow fiber. The bore or lumen as used herein refers to the portion of the fiber which is hollow and located in the interior of such fiber.

The shaped (or deformed) membrane modules of this invention are used to separate one or more fluids from one or more other fluids where the fluids have different transport rates through or across the membrane. The fluids can be in the gas, vapor or liquid form. In one preferred embodiment, the modules of this invention are useful in separating one or more gases from one or more gases. The mixture of gases to be separated preferably comprises at least one of the gases selected from the group consisting of oxygen, nitrogen, methane or other light hydrocarbons, hydrogen, water vapor, carbon dioxide, ammonia, hydrogen sulfide, nitrogen oxides, sulfur oxides, carbon monoxide, helium or argon. Light hydrocarbons as used herein refers to saturated C₁₋₄ hydrocarbons, unsaturated C₂₋₄ hydrocarbons or mixtures thereof. Examples of such gases being separated are hydrogen from light hydrocarbons, oxygen from nitrogen, nitrogen from methane, carbon dioxide from light hydrocarbons, and the like.

In another embodiment, the fluids to be separated are liquids. In one preferred embodiment where the fluids to be separated are liquids, the material which is transported across the membrane is converted to a vapor, which permeates across the membrane. This separation may be referred to as membrane stripping, membrane distillation or pervaporation.

In membrane stripping, a microporous membrane is used and the material permeating through or across the membrane is removed from the device as a gas or vapor. In membrane distillation, a microporous membrane is used and the material permeating through or across the membrane is condensed and removed from the device as a liquid. In pervaporation, a non-microporous membrane, that is, a membrane possessing a dense discriminating layer or region, is used and the material permeating through or across the membrane may be removed as a gas or vapor or condensed and removed from the device as a liquid. In these embodiments, volatile compounds, that is, those with relatively higher vapor pressures under the separation conditions, are separated from compounds with relatively lower vapor pressures. Examples of volatile compounds which may be removed from liquid mixtures include C₁₋₁₀ haloaliphatic and halogenated aromatic hydrocarbons, such as dichloromethane (methylene chloride), dibromomethane (methylene bromide), chlorobenzene and the like.

In this embodiment, volatile compounds, i.e. those with high vapor pressures under the separation conditions, such as chlorinated organics, hydrocarbons and the like, are separated from less volatile liquids. Volatile compounds which may be removed from liquid mixtures include carbon tetrachloride, dichloroethane, methylene chloride, perchloroethane, benzene, and the like. Less volatile liquids from which the volatile compounds may be removed include water and mixtures of water and organics. In another embodiment, gases entrained or dissolved in a liquid may be removed from such liquids. Examples of such gases include oxygen, carbon dioxide, sulfur dioxide, hydrogen sulfide, and ammonia.

There are two preferred embodiments for the module of the present invention, i.e:
(i) for boreside feed wherein both ends of the bundle are embedded in a single tubesheet. In this embodiment for boreside feed, the first and second ends of the bundle although in the same tubesheet (and together require only one exterior fitting) have a sealing barrier between the bores of the fiber bundle. In this way, the feed enters one end of the bores and processed feed exits from the other end. The permeate is found in the exterior region of the fiber bundle.
(ii) for boreside feed, wherein a first tubesheet and second tubesheet are present. This configuration does not need to be in a pressure container and any permeate can be released to the environment. This configuration is useful, for example, in a remote gas well location to separate and release water, oxygen and/or nitrogen from a crude material gas feed. If a sealed container is used, the permeate fluid can be collected for recovery and/or further processing.

In cases (i) and (ii) above, flux efficiency is normally improved by subjecting the permeate side to pressures lower than atmospheric, e.g. between about 750 and 0.001 mm of mercury absolute, preferably between about 700 and 0.1 mm, more preferably between 500 and 25 mm of mercury absolute (1 mmHg ≃ 133 Pa).

In specific embodiments, the module is useful in the separation of liquids and gases using ultrafiltration and microfiltration techniques, which are conventional in these arts.

Hollow Fiber Membrane--The hollow fiber membranes are found in a bundle which comprises a plurality of fibers. Such a bundle may take various shapes and be arranged in various wrapping patterns. Bundles of hollow fibers useful in this invention can comprise various shapes and fiber arrangements, including those disclosed in Mahon US-A-3,228,876 and McLain US-A-3,422,008. Preferably, the bundle is arranged in an organized fashion, e.g braided, helical, etc. Preferably, the fibers in the bundle are arranged in either a parallel wrap fashion or bias wrap fashion. In a parallel wrap fashion, the fibers all lie parallel to one another with each end of the fibers found at each end of the bundle. In a bias wrap fashion, the fibers are wrapped in a crisscross pattern at a set angle, thus holding the fibers in place. In the bias wrap pattern, the ends of the fibers are located at the end of the bundle. The hollow fibers are generally formed from a polymeric material which is capable of separating one or more fluids from one or more other fluids. The methods for preparing such hollow fibers are well known in the art. In one preferred embodiment, the bundle is arranged in a cylindrical fashion with the ends of the fibers at each end of the cylindrical bundle. Such a bundle is preferably an elongated bundle with the length being greater than the diameter.

The materials which may be used to prepare the hollow fiber membranes include any membranes material useful in gas or liquid separation. Preferably these membrane materials include olefinic materials, such as poly-4-methylpentene; polyethylene; polypropylene; fluorinated polyethylene; polytetrafluoroethylene; polyvinylidene fluoride; cellulosic ester; cellulose ether; regenerated cellulose; polyamide; polyetherketone; polyetheretherketone; polyetherketone- ketone; polyphenylene sulfide; polyestercarbonate; polycarbonate; polyester; polyphenylene oxide; polyarylate; polyether; polybenzoxazole; polyoxadiazole; polytriazole; poiycyanoarylether; polyamideimide; polythioether;polystyrene; polysulfone; polyimide; polyetherimide; polyethersulfone; or copolymers or physical blends thereof.

The hollow fiber membranes may be homogeneous, asymmetric, or composite membranes. The membranes may be asymmetric or composite and have a dense discriminating layer or region which separates one or more fluids from one or more other fluids based on differences in solubility and diffusivity of the components in the dense layer or region of the membrane. Alternatively, the membrane may be microporous and separate one or more fluids from one or more fluids based on size, relative volatilities or contact angles of the fluids. The microporous membranes are preferred for membrane stripping applications and are also useful for ultrafiltration or microfiltration. Membranes with dense regions or layers, i.e. asymmetric or composite membranes, are preferred for gas separations. The asymmetrical membranes may have the discriminating region either on the outside of the hollow fiber, at the lumen surface of the hollow fiber, or located somewhere internal to the hollow fiber structure. In that embodiment where the discriminating region of the membrane is internal to the membrane structure, the lumen surface and the outside surface of the membrane are porous, yet the membrane demonstrates the ability to separate gases. More preferred membranes include tetrahalo substituted bis phenol derivatives (such as tetrabromo bisphenol-A), tetraalkyl substituted bisphenol derivatives (such as tetramethyl bisphenol A or tetrahalo-hexafluoro bisphenol A. Even more preferred membranes are the polycarbonate based membranes, and substituted derivatives thereof, such as tetrabromo-hexafluoro-bisphenol A polycarbonate and combinations thereof. In one preferred embodiment such membranes are prepared by the process described in US-A-4,772,392.

References illustrative of the state of the art include United States Patents: US-A-5,034,026; US-A-3,350,844; US-A-3,709,774; US-A-3,852,388; US-A-4,468,500; US-A-4,468,501; US-A-4,468,502; US-A-4,468,503; US-A-4,949,775; US-A-4,971,695; US-A-3,899,309; US-A-4,717,393; US-A-4,717,394; US-A-5,009,679; US-A-5,034,207; US-A-5,040,992; US-A-5,040,993; US-A-5,007,945, US-A-5,013,332; US-A-4,955,993; US-A-4,772,392; US-A-4,486,202; and US-A-4,309,157.

In the embodiment wherein the modules are used for membrane stripping, ultrafiltration or microfiltration, the hollow fibers preferably are microporous and are comprised of a polyolefin or a fluorinated polyolefin, such as polyethylene, polypropylene, poly-4-methylpentene, fluorinated polyethylene, polyetheretherketones, including polyetherketone, polyetherketoneketone; polyphenylene sulfide, polytetrafluoroethylene, polyvinylidene fluoride or copolymers or physical blends thereof.

For suitable liquid separation membrane materials, the following United States Patents are cited as illustrative: US-A-5,057,600; US-A-4,904,426; US-A-5,043,112; and US-A-5,064,580.

In a preferred embodiment, the shaped module wherein the plurality of hollow fiber membranes are twisted circumferentially from one end to the other about an axis through the longitudinal center of the bundle about or greater than the number of degrees of turn found in the deformed module is turned from a substantially linear configuration. That is to say, if the linear module is to be shaped like a french horn having a 360 degrees turn or 720 degrees from linear, then the fiber bundle should also be twisted about 360 degrees or 720 degrees about the axis.

The polymers described herein may also include fillers, antioxidants, colorants, and the like which are conventional additives in polymer and/or membrane technology.

Tubesheet--About each end of the bundle is a tubesheet. The tubesheet functions to hold the hollow fibers in place and to separate the membrane module into three different regions. In boreside feed operations, such regions include the feed inlet region wherein the mixture of fluids to be separated is introduced into the hollow fiber membranes. The second region is the region between the tubesheets wherein a portion of the fluids fed down the bores of the hollow fiber membranes permeates across the membranes into the shellside of the membranes. The third region is the non-permeate outlet region, into which the fluid flowing down the bores of the hollow fiber membranes which does not permeate across the membranes flows and from which such fluid is removed. The tubesheets are comprised of a thermoset or thermoplastic resinous material. Such material should be able to form a fluid tight seal around the hollow fibers to create an integral unit. The inlet-outlet means are sealed to the tubesheet. The hollow fibers in the bundle communicate through the tubesheet, and the face of the tubesheet opposite the bundle is opened such that the bores of the hollow fibers are opened to the region adjacent to such face, thereby allowing communication of fluid from such region into and/or out of said hollow fibers. Most of the tubesheet comprises a composite of the hollow fibers embedded in the resin material. The tubesheet can be any shape which performs the functions described hereinbefore. Preferably, the tubesheet is a cylindrical tubesheet with sufficient width to provide support for the fibers and to withstand the pressures exerted on the tubesheets during operation. The portion of the tubesheet outside the bundle may be built up for various purposes depending upon the design of the module. This portion of the tubesheet may be solely resin or may be made from a resin impregnated cloth which is wrapped around the outer portion of the tubesheet.

A tubesheet may be formed before or after the bundle is installed in the flexible, non permeable, protective tubing. If the protective tubing is such that the finished tubesheet may not be inserted into the envelope after it is formed (e.g. the french horn style module), the tubesheet must be formed after the bundle is installed into the protective envelope. In the case of the french horn style module, the fiber bundle may be drawn into the protective tubing with a cord while the tubing is essentially linear. The fiber bundle can then be trimmed to the appropriate length and the open ends of the fibers sealed by dipping in resin or paint in order to prevent resin penetration into the fiber bores during the tubesheet potting process The ends of the bundle may then be placed in appropriate molds and uncured resin added to saturate the ends of the fiber bundle and fill the spaces between the individual fibers in the bundle and the inner surface of the flexible tubing for a short distance from each tubing end. The cured molded ends are removed from the molds. The molded ends are cut off with a sharp tool at a location between the sealed fiber ends and the upper fill level of the mold. If the cutoff point is through the flexible tubing and the resin does not bond to the tubing, then any excess cured resin can easily be removed from the finished tubesheet. An additional fiber opening cut may be necessary at each tubesheet. Standard compression tubing fittings are optionally installed to complete the module assembly.

Examples of such material useful as resins for tubesheets are known in the art and include, for example, artificial and natural rubber, phenolaldehydes, acrylic resins, polysiloxanes, polyurethanes, fluorocarbons, epoxy resins or combinations thereof.

In the embodiment where the module is used for gas separations, the tubesheets are preferably prepared from epoxy resins, silicone rubber, polyurethanes or the like. Silicone rubber or polyurethanes are preferable for low pressure applications. Any resin which adheres to the hollow fiber membrane and provides stability to a hollow fiber membrane device once cured in the manner described hereinafter can be used in this invention. Polyepoxide resins which are desirable for the resin formulations of this invention include glycidyl polyethers of polyhydric phenols.

The preparation of such resins is well known and is described in a number of patents such as US-A-2,935,488 and others, and in textbooks such as Lee and Neville, Handbooks of Epoxy Resins, McGraw-Hill Book Co., 1967.

Preferred epoxy resins are those resins derived from bisphenol A, e.g., diglycidyl ethers of bisphenol A. Such preferred resins generally correspond to the formula: 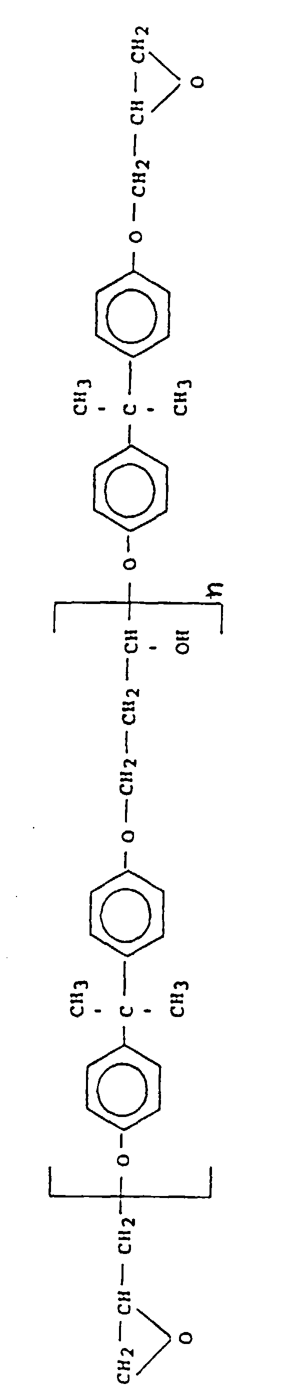 wherein n is a positive real number of between about zero and 15, more preferably between about zero and 3. In the discussion hereinafter, all parts with respect to the resin formulation will be based on 100 parts by weight of the epoxy resin (parts per hundred parts of resin, phr).

The epoxy resin is cured with a curing agent known to those skilled in the art. Preferred curing agents include polyfunctional amines, e.g., aromatic diamines, or mixtures or adducts thereof, and 2,4-dialkylimidazoles. Typical amines include m-phenylenediamine, methylenedianiline, mixtures (including adducts) of m-phenylenediamine and methylenediamine, diaminodiphenylsulfone, 4-chlorophenylene diamine, and the like.

Additional components such as fillers, colorants, etc. conventional in this art may be added.

An optional third component of the tubesheet resin composition is an epoxy curing catalyst. Any known epoxycuring catalyst which enhances the curing of a polyglycidyl ether of a polyhydric phenol with the curing agent may be used. Such catalysts are generally used in catalytic amounts, that is, amounts sufficient to enhance the curing of the epoxy resin with the curing agent. Preferably, the catalyst is present in an amount of between about 0.5 and 10 parts per hundred of resin, more preferably between about 0.5 and 4 parts of catalyst per hundred parts of resin. Preferred catalysts are tertiary amines, for example benzyldimethylamine, N,N,N',N'-tetramethylbutanediamine, dimethyl- aminopropylamine, N-methylmorpholine, N-triethylenediamine, and the like. Generally, where the curing agent is amine based, a catalyst is not necessary.

In the embodiment wherein the module is used for membrane stripping, the tubesheet preferably comprises the epoxy resins described hereinbefore or polyurethanes.

The membrane modules of this invention further comprise end capping means with a feed inlet means. Generally, this is a port or a fitting which allows introduction of the mixture of fluids to be separated into the module. In a boreside feed module, the feed inlet means is found at one end of the module such that the feed can be introduced into the bores of the fibers. Such a feed inlet means is found in the vicinity of the opposite(outside) face of the first tubesheet. The module is designed such that there is a region or cavity, a feed inlet region, which is sealed to prevent fluid communication with the outside environment or with the region between the tubesheets and the outer surface of the fibers. Such region functions as a pressure vessel and the feed inlet means introduces the feed fluids into such region. Such region communicates with the first end of the hollow fiber membranes, thus allowing the fluids to be separated to flow into and down the lumen of the hollow fiber membranes.

The end capping means comprise non-permeate outlet means adapted for removing the fluids which do not permeate through the hollow fiber membrane from the membrane module. In a boreside feed module, the fluids which do not permeate through the membrane exit the bores of the hollow fibers at the end opposite that end to which the feed composition is introduced. The exiting fluids enter a non- permeate outlet region. Such region is adjacent to the opposite (outside) face of the second tubesheet, and is sealed such that fluid cannot communicate with the outside of the membrane device or to the area between the tubesheets which is outside the hollow fiber membranes. This non- permeate outlet region is generally a cavity defined by the end capping means. The non-permeate outlet means can be a port or nozzle adapted for removing the non-permeate fluid from the non-permeate outlet region.

The means for removing the fluids which permeate through the membrane from the vicinity of the membrane is either a port or a nozzle in the protective flexible and impervious tubing adapted for withdrawing the permeate fluid from the vicinity of the membranes. In one embodiment, it is preferable that such means be located near the end of the membrane module to which the feed mixture is introduced. Such a location of the permeate outlet means results in countercurrent flow of the feed mixture with respect to the flow of the permeate mixture which enhances the concentration gradient along the hollow fiber membranes and improves the recovery and productivity of the membrane device.

Protective flexible tubing--The entire membrane bundle is placed in a protective flexible and impervious tubing. The tubing functions to protect the outside of the membrane device and to contain and to seal the membrane device from the outside environment. Further, the tubing is arranged about the tubesheets in such a fashion that a seal is formed between the first tubesheet and the tubing and the second tubesheet and the protective tubing, such that a fluid cannot communicate across or through the seal so as to divide the membrane device into distinct regions. In the boreside feed module, the first region is the feed inlet region, the second region is the region between the tubesheets and outside of the hollow fibers, and the third region is the non-permeate outlet region. The seal is formed by any means which would provide a seal between each of the tubesheets and the protective tubing. In one embodiment, the tubing is a flexible cylinder open at both ends of appropriate size to cover and protect the membrane module, yet close enough in circumference to the circumference of the tubesheet such that a seal can be formed with a sealing means between the tubesheet and the inner wall of the tubing.

The protective tubing may comprise any material which is capable of protecting the membrane bundle. To collect or control the permeate gas, such material should prevent the transmission of fluids through the protective tubing. Preferably, the material is either a plastic, plastic composite, or metal, such as aluminum or steel. Most preferably the tubing is a polymeric plastic.

Where the protective flexible and impervious tubing is open at both ends, at each end of the protective flexible and impervious tubing there are end capping means which are arranged for sealing the end of the protective tubing near the tubesheet to form regions adjacent to the opposite faces of the tubesheets which are opened to the hollow fibers. In a boreside feed module, the region adjacent to the outside face of the second tubesheet is the non-permeate outlet region. Such end capping means are fastened to the protective tubing or the tubesheet in a manner such that a seal is formed to prevent fluid communicating between the outside and the feed inlet region or the outside and the non-permeate outlet region. In a preferred embodiment, the end capping means is an endplate which is fastened by a fastening means to the tubing. Such endplate may be fastened by providing a method of bolting the endplate directly into the tubing. The tubing may have arranged about it or bonded to it an attachment means adapted for attaching the end capping means to the end of the tubing. Each end of the tubing may have arranged around its outside a flange to which the endplate may be fastened. In one embodiment, the flange may be formed by building up the tubesheet.

In one embodiment, commercially available tubing compression fittings are used as endcapping and attachment means.

The modules may be constructed using processes well known in the art. Generally, in module construction the fibers are formed into bundles; such bundles may be of suitable shape for membrane processing; preferred bundle arrangements involve either parallel laying down of fibers or the laying down of fibers in a bias, braided or twisted wrap fashion. The tubesheets may be formed about the ends of the fiber bundles either simultaneously with laying down the fibers, such as bydripping resin along the fibers as the fibers are laid down. Alternatively, the bundle may be formed and then the tubesheet may be formed about each end of the bundle by centrifugal casting or potting techniques; such techniques are well known in the art. In those embodiments where it is desirable to build up the tubesheet to a circumference larger than the circumference of the hollow fiber bundles, the following procedures may be used. Where the tubesheet is formed after the formation of the bundle, the casting or potting technique would involve using appropriate vessels to form a larger circumference tubesheet. In that embodiment where the tubesheet is formed as the fibers are being laid down, once all the fibers have been laid down, the tubesheets may be built up by a variety of methods. One such method is to continue to wrap resin impregnated cloth around the end of the tubesheets or circumference of the tubesheets and provide further resins so that the tubesheets are built up; thereafter, the resin and the built up portion may be cured.

In case a sweep fluid is used, the sweep fluid may be any fluid which aids in the removal of the permeate from the shell side. The sweep fluid can be a liquid, vapor, or gas. In a gas separation or membrane stripping separation, the sweep fluid is preferably a gas. Preferred gases include air, nitrogen, and the like.

In many of these separations, the force which drives the preferentially permeating species across and through the membrane is a pressure differential between the feed side of the membrane and the permeate side of the membrane. Feed side of the membrane refers herein to that side of the membrane to which the fluid mixture from which the desired species is to be separated is contacted. Permeate side of the membrane is that side of the membrane to which the species permeate and on which the stream richer in the preferentially permeating species can be found. Preferably, in the separation of oxygen from nitrogen this pressure differential is between about 5 psi (34 kPa) and 250 psi (1720 kPa), more preferably 90 (620 kPa) and about 250 psi (1720 kPa). It is also possible to run the module wherein the permeate side pressure is a vacuum of between about 740 and 0.0001 mm of mercury. In the separation of nitrogen or carbon dioxide from light hydrocarbons or natural gas, the pressure differential across the membrane is between about 280 (1930 kPa) and about 900 psi (6200 kPa).

In the embodiment wherein oxygen is separated from nitrogen, the separation can take place at temperatures of between about -60°C and about + 100 °C., more preferably between about -30°C and + 100°C. most preferably between -30 and + 60°C. In that embodiment where nitrogen or carbon dioxide is separated from light hydrocarbons or natural gas, the separation can take place at temperatures between about -40°C and about + 120°C, preferably between about -40°C and + 100°C, more preferably between -15°C and + 100°C.

In membrane stripping operations the operating temperatures are preferably between about 10°C and 95°C, the pressure gradient across the membrane is preferably from about 0 to 60 psi (413 kPa).

The separation module of the present invention is versatile. It can be used alone or in combination with other similar or different modules. The module can be used in a series or a parallel configuration, or in a process combined with other conventional separation processes, such as cryogenic distillation, pressure temperature and vacuum swing adsorption.

The individual flexible separation modules can also be combined in groups of 2 or more to provide higher purity and/or higher productivity.

The shaped modules in a series can be the same or different such that a configuration is produced which is capable of removing a number of different components from a fluid feed. For example, in a series of modules, water, oxygen, nitrogen and the like can be removed using different membrane separation modules from a crude natural gas stream.

In a parallel configuration any number of similar modules can be part of a manifold. In this way, the fluid separation is continuous because an individual module is removed for replacement or repair without interrupting or markedly lowering the fluid feed flow. In one embodiment, the modules are formed as a spiral. A number of these modules are formed into a stack unit.

### Description of the Device Fabrication

With regard to the accompanying Figures 1-8, a description of the fabrication of the device follows below:

General--Hollow fiber filaments for separation of fluids conventional in the art are obtained. A tow is a substantially parallel collection of linear filaments. Any number of tows may be used. For example, a number of fiber tows (e.g. 5) are wrapped about a ferris wheel several times (conventional in this art) to create a circular rope of the desired shape. Optionally, a protective covering for the rope is assembled or created around the resultant wrapped rope. Normally, an adhesive tape or other means are used to bind the rope. The rope is then cut at the taped portion, and the rope is removed from the ferris wheel.

Device Having Single Port for Both Feed Fluid and Non- Permeate Fluid--In this embodiment, both ends of the rope of filament are embedded into a single tubesheet connecting to an inlet/outlet. However, the inlet/outlet has a barrier to create separate defined sealed chambers (areas) so that the inlet and outlet fluids do not mix. This is a special case of the general embodiment described below.

Device Having Both Ends of Fibers Open--In a preferred embodiment, the first end and the second end of the bundle (rope) are each placed in a mold and contacted with a polymeric adhesive to embed (encase) both ends and to create two tubesheets wherein the bores in both ends are open.

In boreside feed, the crude feed fluid is forced under pressure into one end of the bores of the rope. At least one fluid component permeates through the hollow fiber and exits through at least one exit port of the impervious flexible tubing. The spent feed fluid exits the device through the other open bore end.

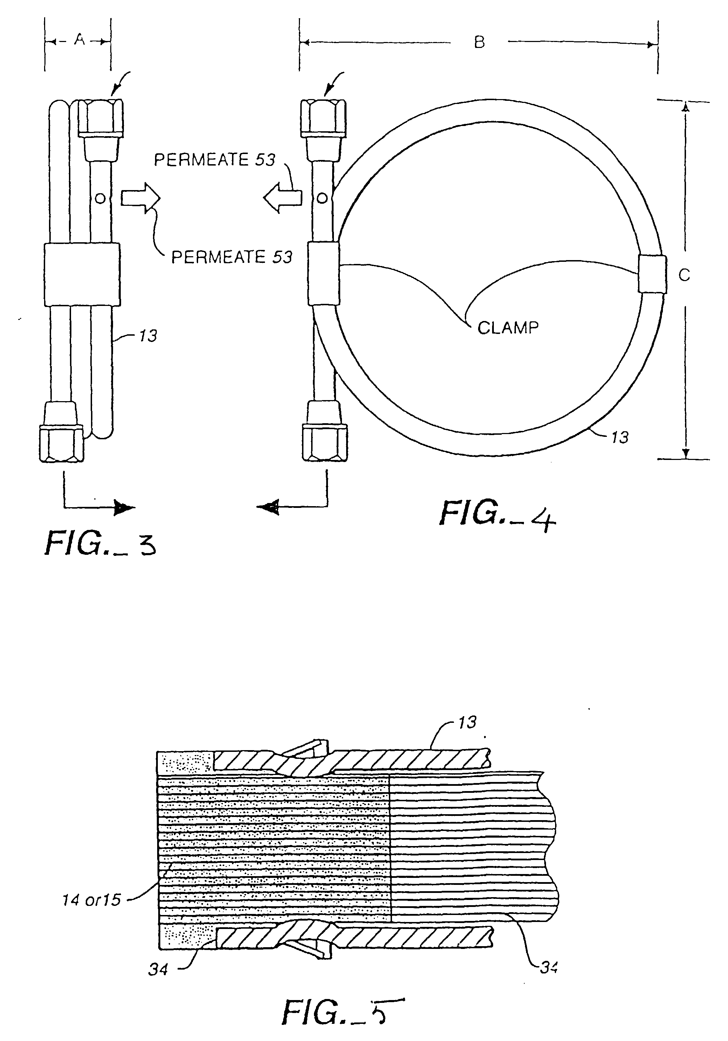

Figures 3 and 4 show different views of the exterior of a module. Also shown are the compression fittings and clamps used to keep the module in a defined configuration. Flexible plastic tubing (such as polybutylene) containing the fiber bundle (rope) and tubesheet can simply be mechanically twisted (or molded) into the desired configuration.

| TABLE FOR FIGURES 3 AND 4 FRENCH HORN CONFIGURATION | | | | | |
|---|---|---|---|---|---|
| MODULE | A (cm.) | B (cm.) | C (cm.) | (cm.) | Tube (O. D. cm.) |
| I | 7.62 | 36.51 | 36.51 | 243.8 | 2.222 |
| II | 7.62 | 32.07 | 31.12 | 213.4 | 2.222 |
| (Tube = 0.203 cm. wall thickness) | | | | | |

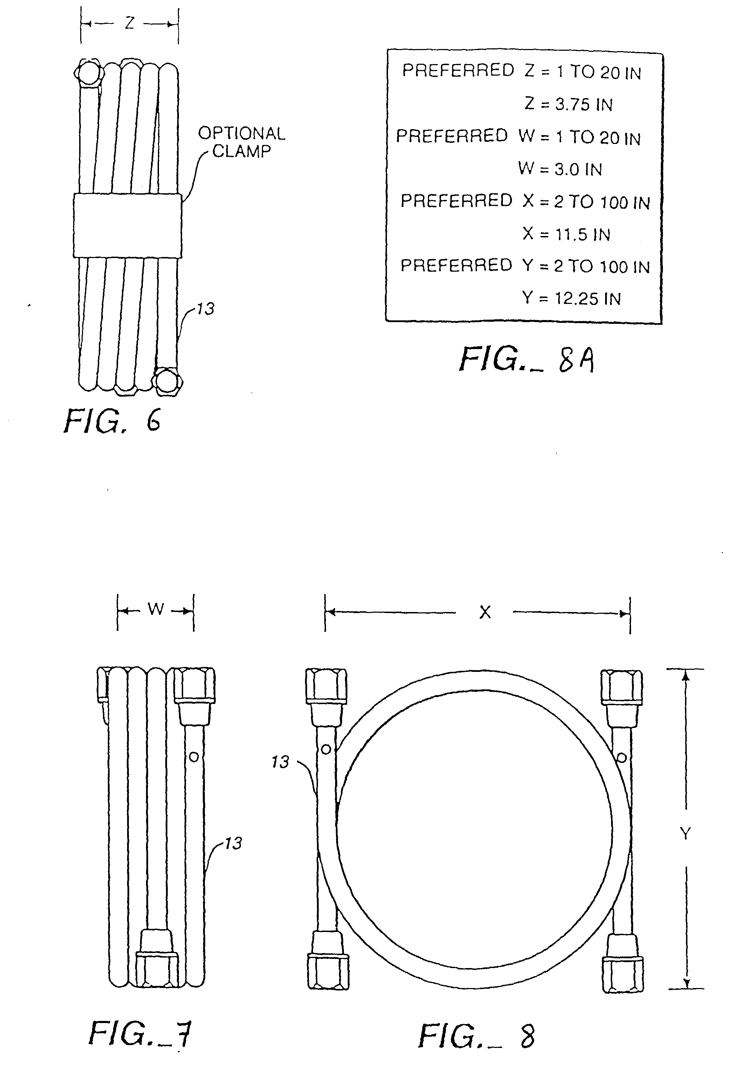

Figure 5 is a schematic cutaway view of an unbonded tubesheet. The resinous tubesheet has a thrust and sealing shoulder to provide extra sealing capability. The fiber rope is embedded in the tubesheet. A compression sleeve provides additional sealing means.

Figures 1, 3, 4 and 5 show a hollow fiber membrane module of the invention.

An embodiment of a premodule suitable for obtaining the module of the invention is illustrated by Figure 2 before shaping. In this embodiment, the flexible and impervious protective tubing (13) surrounds both tubesheets (14, 15) and hollow fiber membrane bundle (10) (some of the hollow fibers are not shown to make the drawing easier to read). Arranged about the tubesheets (14) and (15) and the hollow fiber membrane bundle (10) is a flexible and impervious protective tubing (13) which is bonded to each tubesheet (14) and (15) by resin bonds (28). Welded to each end of the flexible and impervious protective tubing (13) are flanges (29 and 30). The flanges (29 and 30) are adapted for fixing the first endplate (17) to the end of the module near the first tubesheet (14), and the second endplate (18) near the end of the module near the second tubesheet (15). In the first endplate (17) is a feed inlet port (21) adapted for introducing a mixture of gases to be separated into the module. The gas is introduced into a feed inlet region (26), said region (26) is a cavity surrounded on one side by the outside face of the first tubesheet (14) and on the second side by the first endplate (17). Gaskets (35 and 36) between the flanges (29 and 30) and the first and second endplates (17 and 18), respectively are shown. The feed inlet region (26) is sealed from the outside such that gas cannot communicate into said region other than through the feed inlet port (21). In the second endplate (18) is a non-permeate exit port (22). This non-permeate exit port (22) communicates with the non-permeate exit region (27), said region being defined by the outside surface of the second tubesheet (15) and the second endplate (18). This region is sealed from the outside such that gas can only communicate into and out of the region via the hollow fibers of the bundle (10) and the non-permeate exit port (22). Attached to the protective tubing (13) at the end of the said protective tubing (13) near the first tubesheet (14) is a permeate outlet port (32). This permeate outlet port (32) is used to withdraw the gas which permeates across the membranes into the shellside of the membrane. The endplates (17 and 18) are attached to the flanges (29 and 30) via bolts (24). After completion the module is formed into the desired shape.

The operation of the membrane device can be illustrated by reference to Figures 3, 5 and 7. A mixture of fluids to be separated is introduced via the feed inlet port (21) into the feed inlet region (26) under pressure. The fluids to be separated thus flow down the bores of the hollow fiber membranes in the hollow fiber bundle (10). A portion of the fluids permeates across the membranes into the shellside of the membrane device.

Preferably the permeating fluid flows countercurrent to the feed flow direction of the fluids. The fluid which does not permeate exits the hollow fibers of the bundle (10) into the non-permeate exit region (27) and is removed from the device through the non-permeate exit port (22). The permeate is taken from the shellside of the device through the permeate outlet port (32).

In Figure 2, flexible and impervious protective tubing (13) is provided with one or more permeate exit ports (32) near the feed end of the tube. Placement of permeate exit ports near the feed end encourages essentially counterflow behavior of permeate flows with respect to non-permeate flow.

The hollow fibers are brought together to form a rope of fibers of essentially uniform length. This rope of fiber is then drawn into an appropriate length of flexible tubing. A tubesheet is then formed inside each end of the flexible tubing. The tubesheet ends are cut to expose the bores of the fibers.

Standard tubing fittings are then attached to the fiber-filled tubing forming the completed gas separation module.

In this configuration, the curved separation module apparatus may then be operated as a gas separation module. For an air separation module, compressed air enters the bores of the fibers at the feed end of the module. An oxygen enriched portion of the air permeates through the walls of the fibers and exits the flexible tubing through the permeate exit port or ports. The non-permeate stream continues down the hollow bores of the fibers and exits the module at the opposite or non-feed end of the module.

In Figures 1 or 5, the tubesheets may or may not be bonded to the flexible and impervious tubing. If the tubesheets (14) or (15) are not bonded to the tubing (13), some means must be provided tc eal the tubesheet to the surrounding tubing and/or end fittings The use of standard tubing compression fittings (17) or (18) for end fittings is a means of providing a circumferential clamping force providing a radial seal between the tubing and the tubesheet. Forming the tubesheet in a manner that forms a thrust and sealing shoulder (33) extending beyond the end of the tube is another way to form the seal. Using a thrust and sealing shoulder (33) in combination with tubing compression fittings, as illustrated in Figure 8 thus provides double assurance for a dependable end configuration.

When the flexible and impervious tubing module is to be coiled or similarly bent, it is preferable to form a twist in the fiber bundles (rope) prior to or after forming the tubesheets. The twist insures that different fibers are on the outside portion of the bend radius at different points along the length thus minimizing the tendency to stretch these fibers when bending or molding the tube into a deformed shape.

Preferably, the twist to the bundle of fibers is at least the number of degrees circumferentially about an axis through the fiber bundle that the overall case is curved from a linear configuration. More preferably, the twist is one (1) full revolution of 360° or a multiple of 1 (2, 3, 4, etc.).

The coiled tube configuration offers a high length/diameter ratio for the module while maintaining modest overall dimensions. Experience indicates that long modules generally perform better than short modules. High length/diameter ratio modules have less end cut off waste, and a smaller portion of the fiber is imbedded in the tubesheet. The result is improved performance with less fiber required per unit of capacity with modest overall dimensions.

This novel design utilizes low cost readily available hardware and is especially suited for low capacity systems. Two or more modules can easily be formed into a manifold for increased system capacity.

In Table 1, the hollow fiber membranes comprise a copolymer of tetrabromo-bis-phenol A, polycarbonate. The average molecular weight of the polymer ranges from 50,000 to 300,000 daltons. The molecular weight of this polymer is about 145,000 daltons. The fibers have an inside diameter of between about 20 and 1,000 µm, preferably between about 40 to 400 microns, and especially between about 75 to 200 µm. The outer diameter/inner diameter (O.D./I.D.) ratio is between about 3/1 to 1.1/1. For this module, the fiber of Table 1 has O.D. of about 135 microns and I.D. of about 95 µm. The module has about 8750 fibers.

The tubesheet material is a standard resin commercially available polybutylene tubing.

Table 1 shows a separation of oxygen and nitrogen from air using a circle (diameter about 76.2 cm.) module 213.4 cm long x 2.222 cm. O.D. (0.203 cm. thickness).

As can be seen from Table 1, the membrane gas separation is generally equivalent to that of a substantially linear module.

**TABLE 1**

| CIRCLE MODULE (2.13 M) | | | | |
|---|---|---|---|---|
| | 1 PERCENT O₂ PRODUCT | 0.5 PERCENT O₂ PRODUCT | 2 PERCENT O₂ PRODUCT | 5 PERCENT O₂ PRODUCT |
| ROOM TEMP (°C) | 24.7 | 24.7 | 25 | 25.1 |
| | | | | |

| FEED (a) | | | | |
|---|---|---|---|---|
| PRESSURE (kPa) | 932.0 | 935 | 934 | 928 |
| TEMPERATURE (°C) | 24.7 | 24.7 | 25 | 25.1 |
| FLOW RATE (M³/HR ) | 1.45 | 1.30 | 1.53 | 1.97 |
| O2 FRACTION (volume percent) | 0.210 | 0.210 | 0.210 | 0.210 |
| | | | | |

| PERMEATE (a) | | | | |
|---|---|---|---|---|
| TEMPERATURE (°C) | 24.7 | 24.7 | 25 | 25.1 |
| FLOW RATE (M³/HR ) | 1.03 | 0.98 | 0.98 | 1.00 |
| 0₂ FRACTION (volume percent) | 0.291 | 0.273 | 0.316 | 0.364 |
| | | | | |

| PRODUCT (a) | | | | |
|---|---|---|---|---|
| TEMPERATURE (°C) | 24.7 | 24.3 | 25.0 | 25.1 |
| FLOW RATE (M³/HR) | 0.42 | 0.32 | 0.55 | 0.97 |
| 0₂ FRACTION (volume percent) | 0.010 | 0.005 | 0.020 | 0.050 |
| RECOVERY | 28.9 | 24.4 | 36.0 | 49.1 |
| | | | | |

| PRODUCT ADJUSTED TO 25°C | | | | |
|---|---|---|---|---|
| 0₂ FRACTION | 0.0100 | 0.0050 | 0.0200 | 0.0500 |
| FLOW (M³/HR ) | 0.42 | 0.32 | 0.57 | 0.98 |
| RECOVERY (volume percent ) | 29.0 | 24.0 | 36.0 | 49.1 |

| | | | | |
|---|---|---|---|---|
| (a) Pressure, temperature and O₂ fraction are measured. Flow rate is calculated. Pressure: kPa is kilo Pascal. M³/HR is cubic meter per hour. | | | | |

## Claims

1. A curved shaped fluid separation module having boreside feed comprising:
A. a plurality of hollow fiber membranes, wherein the hollow fiber membranes are arranged in a bundle form (10) having a first and a second end and are adapted for the separation of one or more fluids from one or more other fluids, said hollow fibers having bores open at said first and second ends of said bundle;
B. a first tubesheet (14) comprising a thermoset or thermoplastic material in which said first end of the fiber bundle (10) is embedded so that the fiber membranes communicate through the first tubesheet and are open on an opposite face of the first tubesheet, and the disposition of the second end of the fiber bundle is selected from the group consisting of:
(a) the second end of the fiber bundle is embedded in the first tubesheet (14) so that the fiber membranes communicate through the first tubesheet and are open on the opposite face of the first tubesheet (14); and
(b) the second end of the fiber bundle is embedded in a second separate tubesheet (15) comprising a thermoset or a thermoplastic material so that the fiber membranes communicate through the second tubesheet (15) and are open on an opposite face of the second tubesheet;
C. end capping means having a feed inlet means (21) and/or a non-permeate outlet means (22), respectively, adapted for introducing a feed mixture of fluids into the bores of the hollow fibers and for removing the fluids which do not permeate through the hollow fiber membranes, said end capping means forming a sealed feed inlet region provided with a feed inlet means (21) for introducing said feed mixture of fluids into the bores of the hollow fiber membranes and a sealed non-permeate outlet region provided with a non-permeate outlet means (22) for removing the fluids which do not permeate through the hollow fiber membranes, wherein in the case of alternative (a) there is a single end capping means attached to the first tubesheet (14) and a barrier partly defining within said single end capping means said sealed feed inlet region and said sealed non-permeate outlet region, and in the case of alternative (b) an end capping means is attached to each of said first and second tubesheets, the end capping means attached to said first tube sheet (14) forming said sealed feed inlet region and being provided with a feed inlet means (21) and the end capping means attached to said second tubesheet (15) forming said sealed non-permeate region and being provided with a non-permeate outlet means (22); and
D. a curved, flexible, impervious protective tubing (13) open at both ends and including at least one permeate exit port (32) enclosing the hollow fiber membranes bundle (10) attached to first tubesheet (14) and optional second tubesheet (15), when present, wherein in the case of alternative (a) both open ends of said tubing are sealed to said single end capping means and in the case of alternative (b) one end of the tubing (13) is sealed to one end capping means and the other end of the tubing is sealed to the other end capping means, said protective tubing forming a flexible, optionally pressure resisting, casing.

2. The module of claim 1, wherein said hollow fiber membranes are twisted circumferentially from one end to the other about an axis through the longitudinal center of the bundle about or greater than the number of degrees of turn found in the deformed module when turned from a substantially linear configuration.

3. The module of claim 2, wherein the hollow fiber membranes are twisted one full revolution of 360° or a multiple thereof.

## Patentansprüche

1. Gekrümmtes Fluidtrennmodul mit bohrungsseitiger Einspeisung, umfassend:
A. eine Vielzahl von Hohlfasermembranen, worin die Hohlfasermembrane in einer Bündelform (10) mit einem ersten und einem zweiten Ende angeordnet sind und für die Trennung von einem oder mehreren Fluiden von einem oder mehreren anderen Fluiden angepaßt sind, wobei diese Hohlfasern an diesen ersten und zweiten Enden dieses Bündels offene Bohrungen haben;
B. eine erste Rohrplatte (14), umfassend ein hitzegehärtetes oder thermoplastisches Material, in welchem dieses erste Ende des Faserbündels (10) so eingebettet ist, daß die Fasermembrane durch die erste Rohrplatte kommunizieren und auf der gegenüberliegenden Fläche der ersten Rohrplatte offen sind, und die Anordnung des zweiten Endes des Faserbündels ausgewählt ist aus der Gruppe, welche besteht aus:
(a) das zweite Ende des Faserbündels ist in der ersten Rohrplatte (14) eingebettet, so daß die Fasermembrane durch die erste Rohrplatte kommunizieren und auf der gegenüberliegenden Fläche der ersten Rohrplatte (14) offen sind; und
(b) das zweite Ende des Faserbündels in einer zweiten getrennten Rohrplatte (15), umfassend ein hitzegehärtetes oder ein thermoplastisches Material, eingebettet ist, so daß die Fasermembrane durch die zweite Rohrplatte (15) kommunizieren und an einer gegenüberliegenden Fläche der zweiten Rohrplatte offen sind;
C. Endkappeneinrichtungen mit einer Einspeiseinlaßeinrichtung (21) bzw. und/oder einer Nicht-Permeatauslaßeinrichtung (22), ausgelegt für die Einführung einer Einspeisungsmischung von Fluiden in die Bohrungen der Hohlfasern und für die Entfernung der Fluide, welche nicht durch die Hohlfasermembrane permeieren, wobei diese Endkappeneinrichtung einen abgedichteten Einspeiseinlaßbereich bildet, der versehen ist mit einer Einspeiseinlaßeinrichtung (21) zum Einführen dieser Einspeisungsmischung von Fluiden in die Bohrungen der Hohlfasermembrane und einem abgedichteten Nicht-Permeatauslaßbereich, der mit einer Nicht-Permeatauslaßeinrichtung (22) zur Entfernung der Fluide, die nicht durch die Hohlfasermembrane permeieren, versehen ist, worin im Fall der Alternative (a) eine einzige Endkappeneinrichtung, die an der ersten Rohrplatte (14) befestigt ist, vorhanden ist, und eine Barriere innerhalb dieser einzigen Endkappeneinrichtung diesen abgedichteten Einspeiseinlaßbereich und diesen abgedichteten Nicht-Permeatauslaßbereich teilweise begrenzt, und im Fall der Alternative (b) eine Endkappeneinrichtung an jeder dieser ersten und zweiten Rohrplatten befestigt ist, wobei die an dieser ersten Rohrplatte (14) befestigte Endkappeneinrichtung diesen abgedichteten Einspeiseinlaßbereich bildet und mit einer Einspeiseinlaßeinrichtung (21) versehen ist, und die an der zweiten Rohrplatte (15) befestigte Endkappeneinrichtung diesen abgedichteten Nicht-Permeatbereich bildet und mit einer Nicht-Permeatauslaßeinrichtung (22) versehen ist; und
D. ein gekrümmtes flexibles undurchlässiges Schutzrohr (13), das an beiden Enden offen ist und wenigstens eine Permeatauslaßöffnung (32) einschließt und das an der ersten Rohrplatte (14) und an der wahlweisen zweiten Rohrplatte (15) - falls vorhanden - befestigte Hohlfasermembranbündel (10) umschließt, worin im Fall der Alternative (a) beide offenen Enden dieses Rohres gegen diese einzige Endkappeneinrichtung abgedichtet sind und im Fall der Alternative (b) ein Ende des Rohres (13) gegen eine Endkappeneinrichtung abgedichtet ist und das andere Ende des Rohres gegen die andere Endkappeneinrichtung abgedichtet ist, wobei dieses Schutzrohr ein flexibles, wahlweise druckfestes Gehäuse bildet.

2. Modul nach Anspruch 1, bei welchem diese Hohlfasermembrane von einem Ende zu dem anderen um eine Achse durch das Längszentrum des Bündels um etwa die Anzahl oder größer als die Anzahl der Verdrehungsgrade, die in dem deformierten Modul bei Verdrehung von einer im wesentlichen linearen Konfiguration gefunden werden, im Umfang verdreht sind.

3. Modul nach Anspruch 2, bei welchem die Hohlfasermembrane ein volle Umdrehung von 360° oder ein Vielfaches hiervon verdreht sind.

## Revendications

1. Module à séparation de fluides, de forme incurvée et à alimentation côté canal, comportant :
A) de multiples membranes en fibres creuses, lesquelles membranes en fibres creuses sont disposées en un faisceau (10) ayant une première extrémité et une deuxième extrémité, et aptes à séparer un ou plusieurs fluides d'avec un ou plusieurs autres fluides, les canaux de ces fibres creuses étant ouverts aux première et deuxième extrémités dudit faisceau ;
B) une première plaque tubulaire (14) en un matériau polymère thermodurcissable ou thermoplastique, dans laquelle ladite première extrémité du faisceau de fibres (10) est noyée de telle sorte que les membranes en fibres traversent la première plaque tubulaire et débouchent du côté opposé de la première plaque tubulaire, la disposition de la deuxième extrémité du faisceau de fibres étant choisie parmi les suivantes :
a) la deuxième extrémité du faisceau de fibres creuses est noyée dans la première plaque tubulaire (14), de telle sorte que les membranes en fibres traversent la première plaque tubulaire et débouchent du côté opposé de la première plaque tubulaire (14) ; ou bien
b) la deuxième extrémité du faisceau de fibres creuses est noyée dans une deuxième plaque tubulaire (15) distincte, en un matériau polymère thermoplastique ou thermodurcissable, de telle façon que les membranes en fibres traversent la deuxième plaque tubulaire et débouchent du côté opposé de la deuxième plaque tubulaire ;
C) des coiffes d'extrémités, dotées d'une voie d'entrée d'alimentation (21) et/ou d'une voie de sortie de non-perméat (22) qui permettent respectivement d'introduire un mélange de fluides d'alimentation dans les canaux des fibres creuses et d'évacuer les fluides qui ne traversent pas les membranes en fibres creuses par perméation, ces coiffes d'extrémités constituant un domaine étanche d'entrée d'alimentation, muni d'un moyen d'entrée d'alimentation (21) qui sert à introduire ledit mélange de fluides d'alimentation, et un domaine étanche de sortie du fluide non perméé, muni d'un moyen de sortie du non-perméat (22) qui sert à évacuer les fluides qui ne traversent pas les membranes en fibres creuses par perméation, lesdites coiffes d'extrémités étant constituées, dans le cas de la possibilité (a), par un dispositif unique fixé à la première plaque tubulaire (14) et comprenant une barrière qui définit partiellement, à l'intérieur de cette coiffe unique d'extrémité, ledit domaine étanche d'entrée d'alimentation et ledit domaine étanche de sortie de non-perméat, alors que dans le cas de la possibilité (b), une coiffe d'extrémité est fixée à chacune des première et seconde plaques tubulaires, la coiffe d'extrémité fixée à la première plaque tubulaire (14) forme ledit domaine étanche d'entrée d'alimentation et est munie d'un moyen d'introduction d'alimentation (21), et la coiffe d'extrémité fixée à la deuxième plaque tubulaire (15) forme ledit domaine étanche de sortie du non-perméat et est munie d'un moyen d'évacuation du non-perméat ; et
D) une enveloppe tubulaire protectrice imperméable (13), flexible et incurvée, comportant au moins une voie de sortie du perméat (32) et renfermant le faisceau de membranes en fibres creuses fixé à la première plaque tubulaire (14) et, lorsqu'elle est présente, à l'éventuelle deuxième plaque tubulaire (15), les deux extrémités ouvertes de cette enveloppe tubulaire protectrice étant, dans le cas de la possibilité (a), scellées à l'unique coiffe d'extrémité, alors que dans le cas de la possibilité (b), l'une des extrémités de l'enveloppe tubulaire (13) est scellée à l'une des coiffes d'extrémités et l'autre extrémité de l'enveloppe tubulaire est scellée à l'autre coiffe d'extrémité, ladite enveloppe tubulaire protectrice formant un boîtier flexible, éventuellement résistant à la pression.

2. Module conforme à la revendication 1, dans lequel les membranes en fibres creuses sont tordues, suivant la circonférence et d'une extrémité à l'autre, autour d'un axe qui passe par l'axe longitudinal du faisceau, d'un angle à peu près égal ou supérieur à celui dont on tourne le module pour le déformer quand on le courbe à partir d'une configuration pratiquement linéaire.

3. Module conforme à la revendication 2, dans lequel les membranes en fibres creuses sont tordues d'un tour complet de 360° ou d'un nombre entier de tours.
